# EUROPEAN PATENT APPLICATION

(11) **EP 4 567 990 A1**
(43) Date of publication of application: **11.06.2025**
(21) Application number: 23865873.6
(22) Date of filing: 14.09.2023
(51) Int. Cl.: H01M 50/289, H01M 50/204

(54) **BATTERY PACK CASE AND BATTERY PACK COMPRISING SAME**

(30) Priority: 16.09.2022 KR 20220117479; 11.09.2023 KR 20230120704
(71) Applicant: LG Energy Solution, Ltd., Seoul 07335 (KR)
(72) Inventor: NOH, Yu Han, Daejeon 34122 (KR)
(74) Representative: Plasseraud IP
(86) International application number: PCT/KR2023/013847
(87) International publication number: WO 2024/058577

(57) **Abstract**

A battery pack case according to an embodiment of the present invention includes a housing having an accommodation space therein, and a partition plate disposed in the accommodation space to partition the accommodation space, wherein the partition plate may include a first member disposed at the lowermost side, and a second member disposed inside the first member so as to be connected to an inner surface of the first member, the second member being disposed in a diagonal direction with respect to an outer surface of the first member.

## Description

### TECHNICAL FIELD

The present application claims the benefit of the priority of Korean Patent Application Nos. 10-2022-0117479, filed on September 16, 2022, and 10-2023-0120704, filed on September 11, 2023, which are hereby incorporated by reference in their entirety.

The present invention relates to a battery pack case and a battery pack including the same.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can-type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

The secondary battery may be provided in plurality, and then, the plurality of secondary batteries may be integrally accommodated to form a battery module, and a plurality of battery modules may be accommodated again in a specific pack case to manufacture a battery pack.

In the process of manufacturing the battery pack, the battery pack may be manufactured differently depending on its use and purpose according to specific equipment and facilities in which the battery pack is used. At the same time, in order to prevent swelling, which occurs when a gas is generated inside due to overcharging, heat exposure, etc., each battery module has a swelling prevention and gas discharge structure.

However, as the battery pack is manufactured depending on its product, use, and purpose, there is a problem that a process of manufacturing the battery pack becomes complicated, and manufacturing process efficiency is deteriorated. In order to improve this problem, there is a need to be integrated in structure of the battery pack, and simultaneously, prevent secondary damages due to the swelling of the battery module from occurring.

### DISCLOSURE OF THE INVENTION

### TECHNICAL PROBLEM

An object of the present invention is to provide a battery pack in which a structure of a battery pack case is modularized.

An object of the present invention is to provide a battery pack having a structure that is capable of preventing secondary damages due to a swelling phenomenon of a battery module from occurring.

### TECHNICAL SOLUTION

A battery pack case according to an embodiment of the present invention includes a housing having an accommodation space therein, and a partition plate disposed in the accommodation space to partition the accommodation space, wherein the partition plate may include a first member disposed at the lowermost side, and a second member disposed inside the first member so as to be connected to an inner surface of the first member, the second member being disposed in a diagonal direction with respect to an outer surface of the first member.

One side of the second member may be connected to a side surface of the first member, and the other side of the second member may be connected to either a top or bottom surface of the first member.

The second member may include a first diagonal member connected to one surface of the first member and either the top or bottom surface of the first member, and a second diagonal member connected to the other surface of the first member and either the top or bottom surface of the first member, wherein the first diagonal member and the second diagonal member may meet each other at the same point on one of the top and bottom surfaces of the first member.

The first diagonal member and the second diagonal member may be symmetrical with respect to a center line of the first member.

The partition plate may further include a third member disposed inside the second member to support a portion at which the first member and the second member are connected to each other.

One side of the second member may be connected to a side surface of the first member, the other side of the second member may be connected to either a top or bottom surface of the first member, and the third member may be configured to support an inner surface of the first member to which the first member and the second member are connected.

The third member may be provided in a pair, and the pair of third members may be disposed to cross each other.

The partition plate may further include a fourth member configured to connect the first member to the second member.

One side of the fourth member may be connected to an inner edge of the first member, and the other side of the fourth member may be connected to the second member.

The fourth member may be disposed to be symmetrical with respect to a midpoint of the first member.

A battery pack according to an embodiment of the present invention includes: a case comprising a housing having an accommodation space therein and a partition plate disposed in the accommodation space to partition the accommodation space, and a battery module comprising a plurality of secondary batteries and disposed inside the case, wherein the partition plate may include a first member disposed at the lowermost side, and a second member disposed inside the first member so as to be connected to an inner surface of the first member, the second member being disposed in a diagonal direction with respect to an outer surface.

One side of the second member may be connected to a side surface of the first member, and the other side of the second member may be connected to either a top or bottom surface of the first member.

The second member may include a first diagonal member connected to one surface of the first member and either the top or bottom surface of the first member, and a second diagonal member connected to the other surface of the first member and either the top or bottom surface of the first member, wherein the first diagonal member and the second diagonal member may meet each other at the same point on one surface of the top and bottom surfaces of the first member.

The first diagonal member and the second diagonal member may be symmetrical with respect to a center line of the first member.

When the side surface of the first member is pressed by the battery module, the first diagonal member and the second diagonal member may approach each other.

The partition plate may further include a third member disposed inside the second member to support a portion at which the first member and the second member are connected to each other.

### ADVANTAGEOUS EFFECTS

According to the preferred embodiment of the present invention, the structure of the battery pack case may be manufactured to be modularized, thereby improving the efficiency of the battery pack manufacturing process.

According to the preferred embodiment of the present invention, the secondary damages due to the swelling phenomenon of the battery module may be prevented from occurring.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a cross-sectional view of a battery pack case according to an embodiment of the present invention.
FIG. 2 is a cross-sectional view of a partition plate according to an embodiment of the present invention.
FIG. 3 is a cross-sectional view of a partition plate according to another embodiment of the present invention.
FIG. 4 is a cross-sectional view of a battery pack according to an embodiment of the present invention.
FIG. 5 is a cross-sectional view illustrating a state in which the battery pack is swelled according to an embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

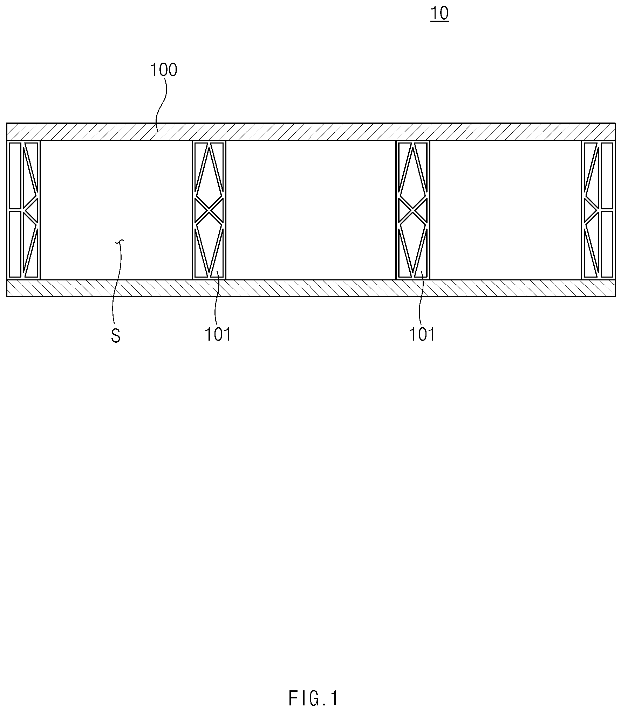

FIG. 1 is a cross-sectional view of a battery pack case 10 according to an embodiment of the present invention.

Referring to FIG. 1, the battery pack case 10 according to an embodiment of the present invention may form an accommodation space (S) therein to accommodate a battery module 11, which will be described later. In other words, the battery pack case 10 may block communication between an internal space and an external space in the state of accommodating the battery module 11 therein to protect the battery module 11. For example, the battery pack case 10 may protect the battery module 11 against external environments and external force such as a high temperature and weather.

In addition, the battery pack case 10 may partition the inside thereof into a plurality of spaces to accommodate each of the plurality of battery modules 11 in each space. Here, when swelling occurs in a specific battery module 11 due to factors such as external force or internal explosion, the swelled battery module 11 may press a partition wall inside the case 10. In this process, the battery pack case 10 may include the partition wall having a structure, which absorbs a pressure caused by the swelling, to prevent secondary damages caused by the swelling phenomenon of the battery module 11 from occurring.

However, the battery module 11 may not be necessarily accommodated inside the battery pack case 10, and the battery pack case 10 may be used in a cell to pack (CTP) structure, that is, a structure in which no module is applied. In other words, the battery pack case 10 may accommodate a battery cell (not shown) including an electrode assembly in the plurality of internal spaces. That is, the battery cell (not shown) may be disposed inside the battery pack case 10. The battery cell (not shown) may include a pouch-type secondary battery or a prismatic-type secondary battery.

Specifically, the battery pack case 10 may include a housing 100 and a partition plate 101.

The housing 100 may form an accommodation space S therein. For example, the housing 100 may include a base plate, a side plate disposed along a circumference of the base plate so that a lower side thereof is connected to the base plate, and a cover plate that covers an upper side of the side plate to form the sealed accommodation space S therein. In other words, the housing 100 may include a rectangular parallelepiped or regular hexahedral structure forming an empty space therein.

The partition plate 101 may be disposed in the accommodation space S to partition the accommodation space S into a plurality of spaces. In other words, the partition plate 101 may be provided in plurality, which are disposed to be spaced a predetermined distance from each other in the accommodation space S. In addition, a lower side of the partition plate 101 may be connected to the base plate, and an upper side of the partition plate 101 may be connected to the cover plate to partition the accommodation space S into the plurality of spaces and also block the plurality of spaces with respect to each other.

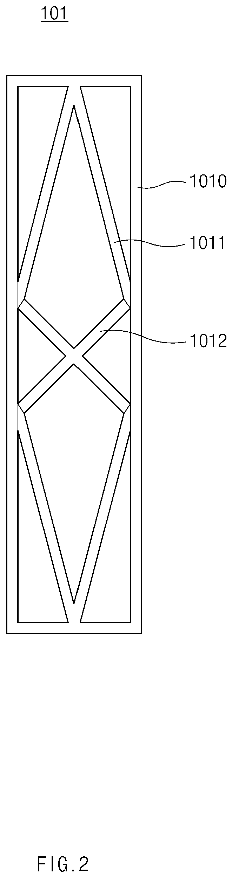

FIG. 2 is a cross-sectional view of the partition plate 10 according to an embodiment of the present invention.

Referring to FIG. 2, the partition plate 101 may include a structure that relieves a pressure due to the swelling of the battery module 11. For example, the partition plate 101 may include a first member 1010, a second member 1011, and a third member 1012.

The first member 1010 may be disposed at the outermost side of the partition plate 101. In other words, the first member 1010 may form an outer surface of the partition plate 101. Specifically, the first member 1010 may form an empty space therein, a lower side of the first member 1010 may be connected to the base plate, and an upper side of the first member 1010 may be connected to the cover plate.

The second member 1011 may be disposed inside the first member 1010 and connected to an inner surface of the first member 1010. For example, the second member 1011 may be formed in a diagonal direction with respect to the outer surface of the first member 1010 and be connected to the inner surface of the first member 1010. Specifically, one side of the second member 1011 may be connected to a side surface of the first member 1010, and the other side of the second member 1011 may be connected to either a top or bottom surface of the first member 1010.

More specifically, the second member 1011 may include a first diagonal member connected to one surface of the first member 1010 and either the top or bottom surface of the first member 1010. Additionally, the second member 1011 may include a second diagonal member connected to the other surface of the first member 1010 and either the top or bottom surface of the first member 1010.

Additionally, the first diagonal member and the second diagonal member may meet each other at the same point on either the top or bottom surface of the first member 1010. In other words, in a state in which one end of each of the first diagonal member and the second diagonal member are connected to a different side surface of the first member 1010, the other end of each of the first diagonal member and the second diagonal member may meet each other at the same point on either the top or bottom surface of the first member 1010. That is, based on a central horizontal line of the first member 1010, the first diagonal member and the second diagonal member disposed at an upper side may meet each other at the same point on the top surface of the first member 1010, and the first diagonal member and the second diagonal member disposed at a lower side may meet each other at the same point on the bottom surface of the first member 1010.

In this case, based on the central horizontal line of the first member 1010, a point at which the first diagonal member and the second diagonal member disposed at the upper side meet the side surface of the first member 1010 may be different from that at which the first diagonal member and the second diagonal member disposed at the lower side meet the side surface of the first member 1010.

In addition, the first diagonal member and the second diagonal member may be symmetrical with respect to a center line of the first member 1010. In other words, the first diagonal member and the second diagonal member may be symmetrical in a left and right direction with respect to a vertical line crossing a center of the first member 1010. In addition, the first diagonal member and the second diagonal member may be vertically symmetrical with respect to a horizontal line crossing the center of the first member 1010.

As a result, according to the above-described structure of the first diagonal member and the second diagonal member, the second member 1011 may include a structure that surrounds an internal space of the first member 1010. In other words, the second member 1011 may surround the internal space of the first member 1010 in the vertical and horizontal symmetrical manner.

The third member 1012 may be disposed inside the second member 1011 to support a portion at which the first member 1010 and the second member 1011 are connected. In other words, one side of the second member 1011 may be connected to the side surface of the first member 1010, and the other side of the second member 1011 may be connected to either the top or bottom surface of the first member 1010. The third member 1012 may support an inner side of the first member 1010 on which the first member 1010 and the second member 1011 are connected to each other.

The third member 1012 may be provided in a pair. The pair of third members 1012 may be disposed to cross each other. In other words, the pair of third members 1012 may be disposed to cross each other so that both ends of the pair of third members 1012 support the side surface of the first member 1010 to which the second member 1011 is connected. For example, there may be a total of four points at which the second member 1011 is connected to the side surface of the first member 1010, and both ends of the pair of third members 1012 may be connected to the four points to support the four points.

Likewise, the third member 1012 may be symmetrical vertically and horizontally with respect to the central horizontal line and central vertical line of the first member 1010.

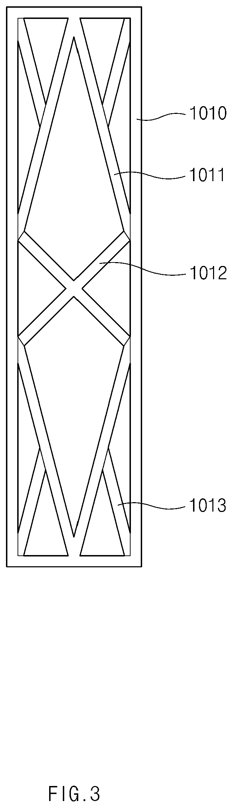

FIG. 3 is a cross-sectional view of a partition plate 101 according to another embodiment of the present invention.

Referring to FIG. 3, the partition plate 101 may further include a fourth member 1013 connecting the first member 1010 to the second member 1011. Specifically, one side of the fourth member 1013 may be connected to an inner edge of the first member 1010, and the other side of the fourth member 1013 may be connected to the second member 1011.

The fourth member 1013 may be disposed to be symmetrical with respect to a midpoint of the first member 1010. Specifically, the fourth member 1013 may be disposed to be symmetrical horizontally with respect to a central vertical line of the first member 1010. In addition, the fourth member 1013 may be disposed to be symmetrical vertically with respect to the central horizontal line of the first member 1010.

Hereinafter, the battery pack 1 according to an embodiment of the present invention will be described. Contents of the battery pack 1, which are duplicated with some of the above-described battery pack case 10, will be omitted below.

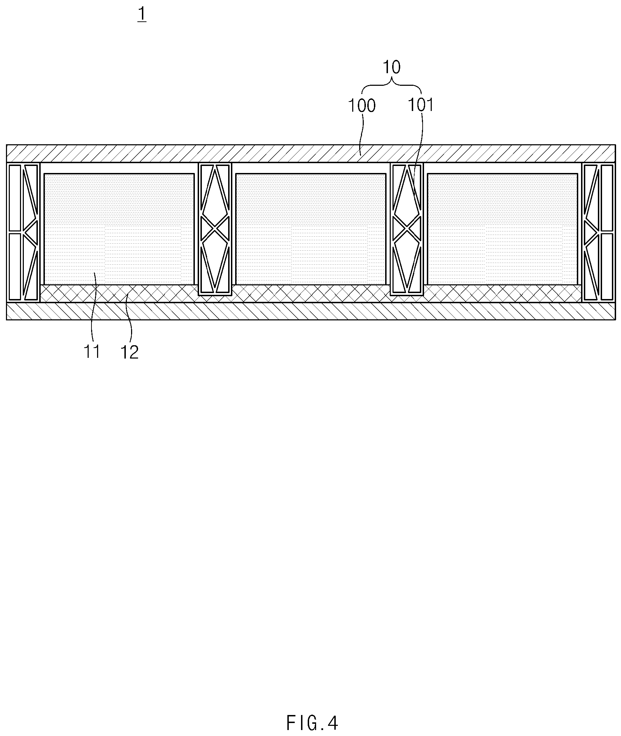

FIG. 4 is a cross-sectional view of the battery pack 1 according to an embodiment of the present invention.

Referring to FIG. 4, the battery pack 1 according to an embodiment of the present invention may include a case 10 and a battery module 11 disposed inside the case 10 to accumulate electrical energy and then output the accumulated electrical energy according to a design. Here, each battery module 11 may include a plurality of secondary batteries and may be accommodated in an internal space of the case 10.

The case 10 may include a housing 100 forming an accommodation space S therein, and a partition plate 101 disposed in the accommodation space S to partition the accommodation space S.

The partition plate 101 may be disposed in the accommodation space S to partition the accommodation space S into a plurality of spaces. The partition plate 101 may include a structure that relieves a pressure due to the swelling of the battery module 11. For example, the partition plate 101 may include a first member 1010, a second member 1011, and a third member 1012.

The first member 1010 may be disposed at the outermost side of the partition plate 101. In other words, the first member 1010 may form an outer surface of the partition plate 101. The second member 1011 may be disposed inside the first member 1010 and connected to an inner surface of the first member 1010. For example, the second member 1011 may be formed in a diagonal direction with respect to the outer surface of the first member 1010 and be connected to the inner surface of the first member 1010. Specifically, one side of the second member 1011 may be connected to a side surface of the first member 1010, and the other side of the second member 1011 may be connected to either a top or bottom surface of the first member 1010.

More specifically, the second member 1011 may include a first diagonal member connected to one surface of the first member 1010 and either the top or bottom surface of the first member 1010. Additionally, the second member 1011 may include a second diagonal member connected to the other surface of the first member 1010 and either the top or bottom surface of the first member 1010.

The third member 1012 may be disposed inside the second member 1011 to support a portion at which the first member 1010 and the second member 1011 are connected. In other words, one side of the second member 1011 may be connected to the side surface of the first member 1010, and the other side of the second member 1011 may be connected to either the top or bottom surface of the first member 1010. The third member 1012 may support an inner side of the first member 1010 on which the first member 1010 and the second member 1011 are connected to each other.

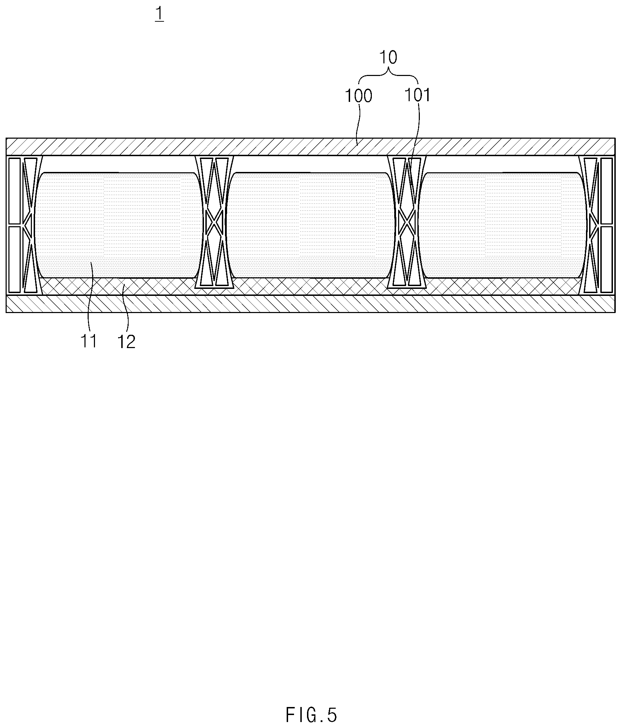

FIG. 5 is a cross-sectional view illustrating a state in which the battery pack 1 is swelled according to an embodiment of the present invention.

Referring to FIG. 5, when the battery module 11 is swelled due to factors such as external force or internal explosion, the battery module 11 may press a side surface of the partition plate 101. For example, in a state in which the plurality of battery modules 11, which are respectively disposed in the plurality of accommodation spaces S, when a specific battery module 11 is swelled, the specific partition plate 101 may be pressed to be deformed in the same shape as that illustrated in FIG. 5. In this case, the partition plate 101 may relieve a pressure caused by the swelled battery module 11.

Specifically, when the side surface of the first member 1010 is pressed by the battery module 11, the first diagonal member and the second diagonal member may become closer to each other. In other words, in the process of pressing the side surface of the first member 1010 by the battery module 11, the first diagonal member and the second diagonal member may be pushed toward the inside of the first member 1010. For example, when the side surface of the first member 1010 is pressed by the battery module 11, an angle at which the first diagonal member and the second diagonal member are inclined with respect to the side surface of the first member 1010 may be reduced. Here, the first diagonal member and the second diagonal member may be deformed into a shape in which the first diagonal member and the second diagonal member are pressed against each other.

In this case, the pair of third members 1012, which cross each other, may also be deformed into a shape that is pressed against a direction in which the first member 1010 is pressed. In other words, the pair of third members 1012 may be deformed into a shape in which the third members 1012 are compressed by receiving external force from both sides.

As a result, due to the structure of the partition plate 101, even if a specific battery module 11 is swelled, the partition plate 101 may relieve a pressure caused by the swelled battery module 11 to prevent secondary damages due to the swelling from occurring.

The battery pack may further include a cooling plate 12 that cools the battery module 11. For example, the cooling plate 12 may be disposed on an inner bottom surface of the housing 100. In a state in which a bottom surface of the cooling plate 12 is connected to the inner bottom surface of the housing 100, the battery module 11 may be disposed on a top surface of the cooling plate 12. The cooling plate 12 may include a cooling passage through which a cooling fluid flows and a cooling plate that maintains a low temperature state.

The cooling plate 12 may include an insertion groove into which the partition plate 101 is inserted and coupled. The partition plate 101 may be inserted and coupled into the insertion groove of the cooling plate 12 so as to be more fixed to the inside of the case, thereby better withstanding the pressure due to the swelled battery module 11.

In addition, a vehicle (not shown) according to another embodiment of the present invention may include the battery pack 1 according to an embodiment of the present invention. That is, the vehicle (not shown) may utilize the electrical energy stored in the battery pack 1 as driving power. The vehicle may include railway vehicles and any transportation machinery that runs on roads. For example, the vehicle may include cars, motorized bicycles, trains, etc.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

1: Battery pack
10: Battery pack case
11: Battery module
12: Cooling plate
100: Housing
101: Partition plate
1010: First member
1011: Second member
1012: Third member
1013: Fourth member
S: Accommodation space

## Claims

1. A battery pack comprising:
a case comprising a housing having an accommodation space therein and a partition plate disposed in the accommodation space to partition the accommodation space; and
a battery module comprising a plurality of secondary batteries and disposed inside the case,
wherein the partition plate comprises:
a first member disposed at the lowermost side; and
a second member disposed inside the first member so as to be connected to an inner surface of the first member, the second member being disposed in a diagonal direction with respect to an outer surface.

2. The battery pack of claim 1, wherein one side of the second member is connected to a side surface of the first member, and the other side of the second member is connected to either a top or bottom surface of the first member.

3. The battery pack of claim 2, wherein the second member comprises:
a first diagonal member connected to one surface of the first member and either the top or bottom surface of the first member; and
a second diagonal member connected to the other surface of the first member and either the top or bottom surface of the first member,
wherein the first diagonal member and the second diagonal member meet each other at the same point on one surface of the top and bottom surfaces of the first member.

4. The battery pack of claim 3, wherein the first diagonal member and the second diagonal member are symmetrical with respect to a center line of the first member.

5. The battery pack of claim 4, wherein, when the side surface of the first member is pressed by the battery module, the first diagonal member and the second diagonal member approach each other.

6. The battery pack of claim 1, wherein the partition plate further comprises a third member disposed inside the second member to support a portion at which the first member and the second member are connected to each other.

7. A battery pack comprising:
a case comprising a housing having an accommodation space therein and a partition plate disposed in the accommodation space to partition the accommodation space; and
a battery cell comprising a plurality of electrode assembles and disposed inside the case,
wherein the partition plate comprises:
a first member disposed at the lowermost side; and
a second member disposed inside the first member so as to be connected to an inner surface of the first member, the second member being disposed in a diagonal direction with respect to an outer surface.

8. The battery pack of claim 7, wherein one side of the second member is connected to a side surface of the first member, and the other side of the second member is connected to either a top or bottom surface of the first member.

9. The battery pack of claim 8, wherein the second member comprises:
a first diagonal member connected to one surface of the first member and either the top or bottom surface of the first member; and
a second diagonal member connected to the other surface of the first member and either the top or bottom surface of the first member,
wherein the first diagonal member and the second diagonal member meet each other at the same point on one surface of the top and bottom surfaces of the first member.

10. A battery pack case comprising:
a housing having an accommodation space therein; and
a partition plate disposed in the accommodation space to partition the accommodation space,
wherein the partition plate comprises:
a first member disposed at the lowermost side; and
a second member disposed inside the first member so as to be connected to an inner surface of the first member, the second member being disposed in a diagonal direction with respect to an outer surface of the first member.

11. The battery pack case of claim 10, wherein one side of the second member is connected to a side surface of the first member, and the other side of the second member is connected to either a top or bottom surface of the first member.

12. The battery pack case of claim 11, wherein the second member comprises:
a first diagonal member connected to one surface of the first member and either the top or bottom surface of the first member; and
a second diagonal member connected to the other surface of the first member and either the top or bottom surface of the first member,
wherein the first diagonal member and the second diagonal member meet each other at the same point on one of the top and bottom surfaces of the first member.

13. The battery pack case of claim 12, wherein the first diagonal member and the second diagonal member are symmetrical with respect to a center line of the first member.

14. The battery pack case of claim 10, wherein the partition plate further comprises a third member disposed inside the second member to support a portion at which the first member and the second member are connected to each other.

15. The battery pack case of claim 14, wherein one side of the second member is connected to a side surface of the first member, and the other side of the second member is connected to either a top or bottom surface of the first member, and
the third member is configured to support an inner surface of the first member to which the first member and the second member are connected.

16. The battery pack case of claim 15, wherein the third member is provided in a pair, and the pair of third members are disposed to cross each other.

17. The battery pack case of claim 14, wherein the partition plate further comprises a fourth member configured to connect the first member to the second member.

18. The battery pack case of claim 17, wherein one side of the fourth member is connected to an inner edge of the first member, and the other side of the fourth member is connected to the second member.

19. The battery pack case of claim 18, wherein the fourth member is disposed to be symmetrical with respect to a midpoint of the first member.

20. A vehicle comprising the battery pack of claim 1.
